# EUROPEAN PATENT SPECIFICATION

(11) **EP 4 395 283 B1**
(45) Date of publication and mention of the grant of the patent: **31.12.2025**
(21) Application number: 22876680.4
(22) Date of filing: 24.08.2022
(51) Int. Cl.: H04L 67/303, H04L 67/306, H04L 67/5681, H04L 67/565, G06F 9/451, H04L 9/40, G06F 8/38, H04L 67/12

(54) **METHOD AND ELECTRONIC DEVICE FOR USING DATA OF EXTERNAL ELECTRONIC DEVICE**
VERFAHREN UND ELEKTRONISCHE VORRICHTUNG ZUR VERWENDUNG VON DATEN EINER EXTERNEN ELEKTRONISCHEN VORRICHTUNG
PROCÉDÉ ET DISPOSITIF ÉLECTRONIQUE POUR UTILISER DES DONNÉES D'UN DISPOSITIF ÉLECTRONIQUE EXTERNE

(30) Priority: 29.09.2021 KR 20210129212; 03.11.2021 KR 20210149924
(43) Date of publication of application: 03.07.2024
(73) Proprietor: Samsung Electronics Co., Ltd., Suwon-si, Gyeonggi-do 16677 (KR)
(72) Inventor: CHO, Jinhoon, Suwon-si, Gyeonggi-do 16677 (KR); CHUNG, Heeyoung, Suwon-si, Gyeonggi-do 16677 (KR); KIM, Doha, Suwon-si, Gyeonggi-do 16677 (KR); KIM, Hyunkyoung, Suwon-si, Gyeonggi-do 16677 (KR); KIM, Ho, Suwon-si, Gyeonggi-do 16677 (KR); YOON, Kyoungsoo, Suwon-si, Gyeonggi-do 16677 (KR); JUNG, Minjoo, Suwon-si, Gyeonggi-do 16677 (KR); HAN, Jaehyun, Suwon-si, Gyeonggi-do 16677 (KR)
(74) Representative: Nederlandsch Octrooibureau
(86) International application number: PCT/KR2022/012671
(87) International publication number: WO 2023/054905

(56) References cited:
- WO-A1-2006/025241
- AU-A4- 2021 103 692
- KR-A- 20100 006 325
- KR-A- 20110 036 930
- KR-A- 20120 086 611
- KR-A- 20140 001 583
- US-A1- 2016 065 626
- US-A1- 2017 026 921
- US-A1- 2017 353 845

## Description

### [Technical Field]

Various embodiments of the disclosure relate to a method and an electronic device for using data of an external electronic device.

### [Background Art]

Recently launched electronic devices, such as a smartphone, a wearable electronic device (e.g., a wearable watch and/or wearable glasses), and/or a tablet device, may access a wireless communication server (e.g., an Internet server), operate in on-line scheme, and wirelessly transmit or receive data. The electronic device may be designed with different form factors and/or different operating systems (OSs), but may transmit or receive at least one piece of data through a server.

According to an embodiment, the electronic device may identify at least one external electronic device (e.g., another electronic device, a wearable electronic device, a PC) having accessed a server with the same account, and acquire at least one piece of data from the identified external electronic device. The electronic device may utilize data of the external electronic device by the electronic device itself. US 2016/065626 A1 introduces "cross-device task continuity," where task-context data saved in a user profile lets any other device on the same account surface a UI that instantly resumes the task across different devices and operating systems. US 2017/353845 A1 describes a sharing system in which a first device gathers data, a second device turns that data into template-based content and uploads it via verified account credentials, showing UI buttons for each account to manage the share.

### [Disclosure of Invention]

### [Technical Problem]

In acquiring data from an external electronic device, an electronic device may be generally connected to one external electronic device, and acquire a data set from the connected external electronic device. Specifically, when the electronic device and the external electronic devices are operated based on different operating systems (e.g., heterogeneous OSs, i.e., an Android-based electronic device and another Window-based electronic device), data sharing therebetween may be difficult. Even though the electronic device acquires data of the external electronic device, it may be difficult for the electronic device to properly utilize the acquired data.

According to various embodiments of the disclosure, the electronic device may acquire data to be utilized by the electronic device, by selecting the external electronic device, based on the same account. According to an embodiment, the electronic device may transform the acquired data to be appropriate for the electronic device, and a method and an electronic device for utilizing the acquired data in various ways may be provided.

### [Solution to Problem]

An object of the invention to address the above problem is an electronic device according to claim 1. A further object of the invention is a method according to claim 10. Preferred embodiments are covered by the appended dependent claims.

### [Advantageous Effects of Invention]

According to various embodiments of the disclosure, an electronic device may select data from multiple external electronic devices accessing with the same account and acquire the data, and may properly transform the acquired data, based on a configuration reference (e.g., environment configuration information) of the electronic device. The electronic device may recommend, based on the acquired data, a utilizable application to a user, and execute the application to utilize the acquired data.

According to an embodiment, the electronic device may acquire various data from multiple external electronic devices while not being limited to a specific form factor and a specific operating system, and utilize the acquired data in various schemes. When a user operates multiple electronic devices together, convenience can be enhanced. In addition, various effects directly or indirectly identified through the document can be provided.

### [Brief Description of Drawings]

With regard to description of drawings, identical or similar reference numerals may be used for identical or similar elements.
FIG. 1 is a block diagram illustrating an electronic device in a network environment according to various embodiments of the disclosure.
FIG. 2 illustrates an example of a method of acquiring data from multiple external electronic devices according to various embodiments of the disclosure
FIG. 3 is a flow chart illustrating a method of generating, based on data acquired from an external electronic device, a user interface according to various embodiments of the disclosure.
FIG. 4 is a flow chart illustrating a method of selecting one piece of data when pieces of data having the same attribute are acquired according to various embodiments of the disclosure.
FIG. 5 is a flow chart illustrating a method of selecting one piece of data when unsupported data is included according to various embodiments of the disclosure.
FIG. 6 is a flow chart illustrating a method of installing, based on data acquired from an external electronic device, an application and generating a user interface corresponding to the application according to various embodiments of the disclosure.
FIG. 7 illustrates an example of a method of selecting at least one piece of data among pieces of data acquired from multiple external electronic devices and utilizing the selected data according to various embodiments of the disclosure.
FIG. 8 illustrates an example of a first user interface for selecting at least one piece of data among pieces of data acquired from multiple external electronic devices and a second user interface for selecting one of the multiple external electronic devices and selecting at least one piece of data according to various embodiments of the disclosure.
FIG. 9 illustrates an example of a method of accessing a server with a first account by an electronic device and acquiring, based on the first account, data from multiple external electronic devices according to various embodiments of the disclosure.
FIG. 10 illustrates an example of a method of installing and displaying an application or installing and displaying a widget, based on data acquired from an external electronic device according to various embodiments of the disclosure.
FIG. 11A illustrates an example of a method of selecting at least one piece of data if piece of data acquired from external electronic devices are pieces of data having the same attribute according to various embodiments of the disclosure.
FIG. 11B illustrates an example of a method of executing, based on data acquired from an external electronic device, an additional operation for restoration according to various embodiments of the disclosure.
FIG. 11C illustrates an example of a method of configuring, based on secure data acquired from an external electronic device, a user interface according to various embodiments of the disclosure.
FIG. 11D illustrates an example of a method of displaying data not supported by an electronic device among piece of data acquired from an external electronic device according to various embodiments of the disclosure.
FIG. 12 illustrates an example of a method of identifying a second external electronic device operatively connected through a first external electronic device and operatively connecting the identified second external electronic device and an electronic device according to various embodiments of the disclosure.
FIG. 13 illustrates an example of a method of acquiring data from multiple external electronic devices and utilizing the acquired data by an electronic device according to various embodiments of the disclosure.
FIG. 14 illustrates an example of a method of selecting a method of connecting to multiple external electronic devices, acquiring data through the selected connection method, and utilizing the acquired data according to various embodiments of the disclosure.

### [Mode for the Invention]

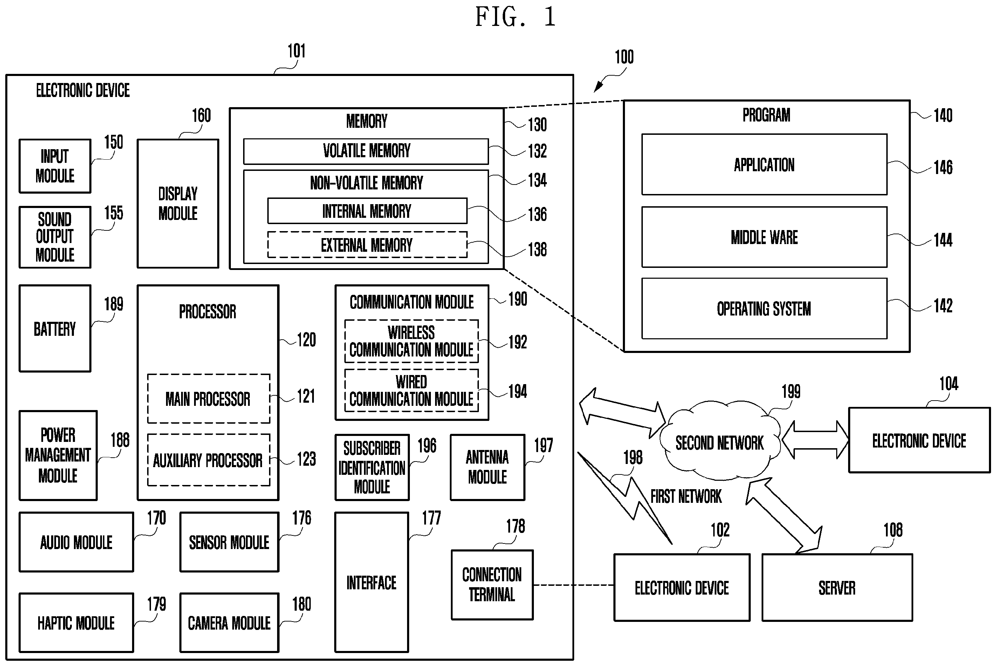

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

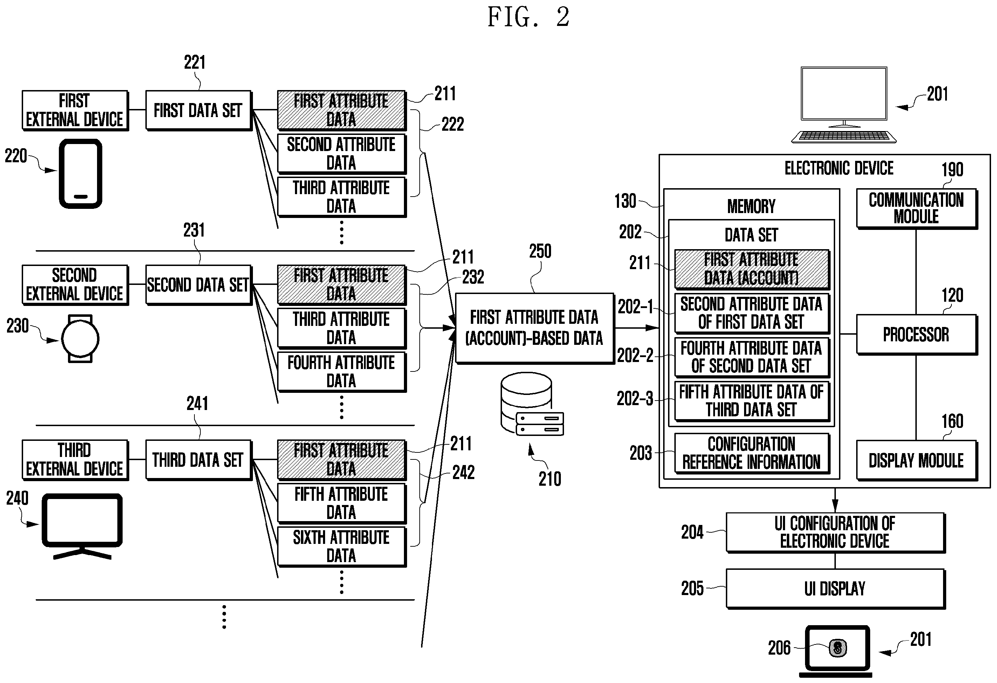

FIG. 2 illustrates an example of a method of acquiring data from multiple external electronic devices according to various embodiments of the disclosure.

According to various embodiments, an electronic device 201 (e.g., the electronic device 101 of FIG. 1) may store at least one program (e.g., the program 140 of FIG. 1) in a memory (e.g., the memory 130 of FIG. 1) as software. For example, the at least one program 140 may include at least one application (e.g., the application 146 of FIG. 1). The application 146 may be defined as application software developed to perform a specific task, and may provide a user with various functions to enable the user to effectively perform the specific task. For example, the electronic device 201 may execute a synchronization-related application to share data to an external electronic device (e.g., the electronic device 102 or 104 of FIG. 1, a first external device 220, a second external device 230, or a third external device 240), and transmit or receive data therebetween through a server 210 (e.g., the server 108 of FIG. 1).

According to an embodiment, the first external device 220 may include a portable electronic device (e.g., a smartphone), and may be in a state in which a first data set 221 is stored in a storage space (e.g., memory). For example, the first data set 221 may include at least one of information (e.g., account information or identification information) related to a user of the first external device 220, information (e.g., message information) related to a message transmitted or received based on the first external device 220, information on an installed application, environment configuration information, image data, video data, text data, voice data, and/or theme-related information. The first data set 221 is not limited to the above-described items, may be used for the first external device 220, or may include information stored in the storage space of the first external device 220. The first data set 221 may include multiple pieces of attribute data 222 (e.g., first attribute data 211, second attribute data, and/or third attribute data).

According to an embodiment, the second external device 230 may include an electronic device (e.g., a wearable watch), and may be in a state in which a second data set 231 is stored in the storage space (e.g., memory). For example, the second data set 231 may include at least one of user (e.g., account information or identification information) related to a user of the second external device 230, information (e.g., message information) related to a message transmitted or received based on the second external device 230, information on an installed application, environment configuration information, image data, video data, text data, voice data, and/or theme-related information. The second data set 231 is not limited to the above-described items, may be used for the second external device 230, or may include information stored in the storage space of the second external device 230. The second data set 231 may include multiple pieces of attribute data 232 (e.g., first attribute data 211, third attribute, and/or fourth attribute data).

According to an embodiment, the third external device 240 may include a television (e.g., smart TV), and may be in a state in which a third data set 241 is stored in the storage space (e.g., memory). For example, the third external set 241 may include at least one of information (e.g., account information or identification information) related to a user of the third external device 240, information (e.g., message information) related to a message transmitted or received based on the third external device 240, information on an installed application, environment configuration information, image data, video data, text data, voice data, and/or theme-related information. The third data set 241 is not limited to the above-described items, may be used for the third external device 240, or may include information stored in the storage space of the third external device 240. The third data set 241 may include multiple pieces of attribute data 242 (e.g., first attribute data 211, fifth attribute data, and/or sixth attribute data).

Referring to FIG. 2, the first external device 220, the second external device 230, and/or the third external device 240 may be in a state operatively connected, based on the same account (e.g., the first attribute data 211 and first account information), to the server 210, may transmit or receive data therebetween. According to an embodiment, the first external device 220 and the second external device 230 may be operated based on the same operating system (OS), and may include pieces of data having the same attribute, respectively. For example, the third attribute data 222 stored in the first external device 220 may be at least partially matched to third attribute data 232 stored in the second external device 230.

According to an embodiment, the server 210 may manage, based on the same account (e.g., the first attribute data 211 and the first account information), multiple external devices (e.g., the first external device 220, the second external device 230, and/or the third external device 240). For example, the server 210 may acquire at least one piece of data from the multiple external devices, and may store the acquired at least one piece of data in the storage space (e.g., database (DB) and memory) based on the first attribute data 211 (e.g., first account information).

According to an embodiment, the electronic device 201 may acquire data on the multiple external devices (e.g., the first external device 220, the second external device 230, and/or the third external device 240) through the server 210 in response to execution of the synchronization-related application (e.g., synchronization instruction). For example, the electronic device 201 may access, based on the first attribute data 211 (e.g., first account information), the server 210, identify first attribute data-based data 250 (e.g., data of multiple external devices) stored in the server 210, and select the corresponding data.

Referring to FIG. 2, the electronic device 201 may include a processor (e.g., the processor 120 of FIG. 1), a memory (e.g., the memory 130 of FIG. 1), a communication module (e.g., the communication module 190 of FIG. 1), and/or a display module 160. For example, the electronic device 201 may include a computer (e.g., personal computer (PC)), and may be operated based on Window OS. According to an embodiment, the electronic device 201 may be operatively connected to the external devices 220, 230, and 240 and the server 210 through the communication module 190, and may transmit or receive data therebetween. The electronic device 201 may store a data set 202 and configuration reference information 203 in the memory 130. For example, the data set 202 may include at least one of information (e.g., account information and first attribute data 211) related to a user of the electronic device 201, information related to a message transmitted or received based on the electronic device 201, information on an installed application, environment configuration information, image data, video data, text data, voice data, and/or theme-related information. For example, the configuration reference information 203 of the electronic device 201 may include specifications (spec), specification information, form factor-related information, operating system information, and/or setting information of the electronic device 201.

According to an embodiment, the processor 120 of the electronic device 201 may acquire at least one piece of data (e.g., second attribute data 202-1 of the first data set 221, fourth attribute data 202-2 of the second data set 231, and/or fifth attribute data 202-3 of the third data set) of the multiple external devices (e.g., the first external device 220, the second external device 230, and/or the third external device 240) through the server 210, and store the same in the data set 202 of the memory 130.

According to an embodiment, the processor 120 may identify, based on the first attribute data 211 (e.g., first account information), the first attribute data-based data 250 stored in the server 210, and select at least one piece of the first attribute data-based data 250. For example, the processor 120 may display, through the display module 160, the first attribute data-based data 250 in the form of a list, and may select at least one piece of data according to a selection of a user. According to an embodiment, the processor 120 may differentially display at least one piece of data according to a configured priority when multiple pieces of data are selected together based on the same attribute (e.g., first attribute data 211). For example, the processor 120 may display data having a relatively high priority on the top of the list. According to an embodiment, when displaying, through the display module 160, the first attribute data-based data 250 in the form of a list, the processor 120 may apply a highlight effect (e.g., emphasis effect) to the data and display the same so that the user can easily identify the data having a relatively high priority. For example, the processor 120 may apply a visual effect to data having a high priority and display the same so as to distinguish between the data having a high priority and other pieces of data. For example, when the data having a high priority is displayed in the form of text, the processor 120 may apply a highlight effect to the data having a high priority and display the same in a scheme of changing the type (e.g., font) of the text, the size of the text, the color of the text, and/or the thickness (e.g., bold) of the text. In another example, the processor 120 may also apply a shadow effect to a partial area including the data having a high priority to display the data darker or brighter so as to distinguishing between the partial area and the other areas. According to an embodiment, the processor 120 may select, based on the first attribute data-based data 250, at least one piece of data, and may generate, based on the selected at least one piece of data, a user interface (UI) corresponding to the configuration reference information 203 of the electronic device 201.

Referring to FIG. 2, in operation 204, the processor 120 may configure, based on the selected at least one piece of data, a user interface (UI), and in operation 205, the processor 120 may display the configured user interface through the display module 160. For example, the user interface may include an icon 206 corresponding to an application and a widget corresponding to the application.

According to an embodiment, data acquired from the multiple external electronic devices may include at least one of configuration information (e.g., brightness information, contrast information, screen size information, screen active time information, and/or screen inactive time information) related to the display module 160, general configuration information (e.g., language information, date information, time information, and/or battery information), theme information (e.g., home screen theme information and lock screen theme information), communication-related information (e.g., information on a supportable communication scheme, information on a history of connection with a peripheral device, and information on a peripheral device that is currently being connected), and/or cloud configuration information.

According to an embodiment, when the multiple external electronic devices correspond to a wearable device, data acquired from the wearable device may include data requiring an additional operation for restoration. The data acquired from the wearable device may include data (e.g., heart rate data, ECG data, and/or blood pressure-related data) measured using a specific (e.g., a sensor for measurement of biometric data) disposed in the wearable device. According to an embodiment, the electronic device 201 may execute, based on the data acquired from the wearable device, the additional operation for restoration.

According to an embodiment, the electronic device 201 may acquire data from multiple external electronic devices accessing with the same account, and select, based on a configuration reference (e.g., the configuration reference information 203) of the electronic device 201, the acquired data. The electronic device 201 may utilize the selected data in various schemes. According to an embodiment, the electronic device 201 is not limited to a specific form factor and a specific operating system, and may acquire various data from the multiple external electronic devices. According to an embodiment, the electronic device 201 may convert, based on the operating system that is operated by the electronic device 201, the acquired data. According to an embodiment, when a user operates the multiple electronic devices together, data can be shared among the multiple electronic devices, and the usability and convenience of the multiple electronic devices can be enhanced.

According to various embodiments, an electronic device 201 may include a communication module 190 configured to communicate with at least one external electronic device 220, 230, and 240, a memory 130 configured to store configuration reference information 203 for selecting at least one piece of data, and a processor 120 operatively connected to the communication module 190 and the memory 130. The processor 120 may acquire, through the communication module 190, first data 222 of a first external electronic device 220 and second data 232 of a second external electronic device 230 having an account identical to that of the first external electronic device 220, select, based on the configuration reference information 203 stored in the memory 130, at least one piece of data from among the first data and the second data, and generate, based on the selected at least one piece of data, a user interface.

According to an embodiment, the electronic device 201 may further include a server 210 configured to transmit or receive data between the electronic device 201 and the at least one external electronic device, and the first data and the second data may be stored in a storage space of the server.

According to an embodiment, the processor 120 may access, based on a first account (e.g., the first attribute data 211), the server 210, identify the first external electronic device 220 and the second external electronic device 230 accessing, based on the first account, the server 210, and acquire first data of the first external electronic device 220 and second data of the second external device 230 through the server 210.

According to an embodiment, the configuration reference information 203 includes at least one of specifications, specification information, form factor-related information, operating system information, and setting information of the electronic device 201.

According to an embodiment, the processor 120 may identify, based on the first data and the second data, whether two or more pieces of data having an identical attribute are included, and in case that the two or more pieces of data having the identical attribute are identified, select, based on a configured priority, the two or more pieces of data having the identical attribute.

According to an embodiment, the processor 120 may identify, based on the first data and the second data, whether security-related data is included, and select the security-related data so as to distinguish between security-related data corresponding to the first external electronic device 220 and security-related data corresponding to the second external electronic device 230.

According to an embodiment, the processor 120 may identify a distance from the first external electronic device 220 through the communication module 190, and in case that the identified distance is within a configured distance, activate the security-related data so as to enable the security-related data corresponding to the first external electronic device 220 to be identified.

According to an embodiment, the processor 120 may identify an operating system scheme of operating the electronic device 201, identify, based on the first data and the second data, unsupported data corresponding to the identified operating system scheme, and generate the user interface to prevent the identified unsupported data from being selected.

According to an embodiment, the processor 120 may identify, based on the first data and the second data, whether data requiring an additional operation for restoration is included, and in case that the data requiring the additional operation for restoration is included, perform, based on the identified operating system scheme, a restoration operation for the data.

According to an embodiment, the processor 120 may identify, based on the first data and the second data, at least one application, download the identified at least one application through the communication module 190, and execute the at least one application.

According to an embodiment, the processor 120 identify, based on the first data, a peripheral electronic device operatively connected to the first external electronic device 220, and operatively connect to the identified peripheral electronic device through the communication module 190.

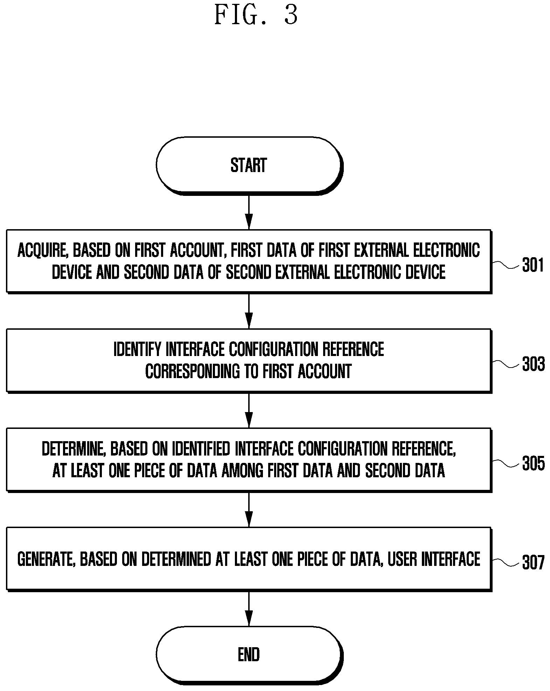

FIG. 3 is a flow chart illustrating a method of generating, based on data acquired from an external electronic device, a user interface according to various embodiments of the disclosure.

According to various embodiments, an electronic device (e.g., the electronic device 101 of FIG. 1 and the electronic device 201 of FIG. 2) may perform login based on a first account (e.g., a user account and the first attribute data 211 of FIG. 2) in response to execution of a synchronization-related application, and may be operatively connected to at least one external electronic device (e.g., the electronic device 102 or 104 of FIG. 1 or the first external device 220, the second external device 230 or the third external device 240 of FIG. 2) having performed login with the same first account through a server (e.g., the server 108 of FIG. 1 or the server 210 of FIG. 2). According to an embodiment, when each of the electronic device 201 and the external electronic device performs login based on the first account through the server 108, the electronic device and the external electronic device may transmit or receive data therebetween. According to an embodiment, in acquiring and utilizing data of the external electronic device, the electronic device 201 may transform, based on configuration reference information (e.g., the configuration reference information 203 of FIG. 2) corresponding to the electronic device 201, data of the external electronic device and utilize the transformed data.

In operation 301, a processor (e.g., the processor 120 of FIG. 1) of the electronic device 201 may acquire, based on the first account, first data (e.g., data included in the first data set 221) of the first external electronic device 220 and second data (e.g., data included in the second data set 231) of the second external electronic device 230.

In operation 303, the processor 120 may identify an interface configuration reference (e.g., the configuration reference information 203 of FIG. 2) corresponding to the first account. For example, the interface configuration reference may include reference information processable by the electronic device 201, in utilizing the first data and the second data by the electronic device 201. For example, the processor 120 may execute an application stored in a memory (e.g., the memory 130 of FIG. 1) and determine whether the first data and the second data can be processed, based on the interface configuration reference. The interface configuration reference may include a reference value for determining whether to select data.

In operation 305, the processor 120 may determine, based on the identified interface configuration reference, at least on piece of the first data and the second data. For example, the processor 120 may select at least one piece of data satisfying the interface configuration reference.

In operation 307, the processor 120 may generate, based on the determined at least one piece of data, a user interface. For example, the processor 120 may process or transform, based on an operating system of the electronic device 201, the at least one piece of data, and design the user interface so that the processed data is included in the operating system-based user interface.

According to an embodiment, even though the electronic device 201 is designed with a form factor different from that of the external electronic device, or is operated by an operating system different from that of the external electronic device, the electronic device may acquire at least one piece from the external electronic device, and generate, based on the acquired at least one piece of data, a user interface. According to an interface configuration reference for the electronic device 201, the electronic device 201 may process or transform the at least one piece of data. The electronic device 201 may design, based on the processed or transformed at least one piece of data, the user interface. According to an embodiment, the electronic device 201 may display, through a display module (e.g., the display module 160 of FIG. 1), the user interface generated based on the data acquired from the external electronic device. According to an embodiment, for a user to operate multiple electronic devices together, user convenience can be enhanced.

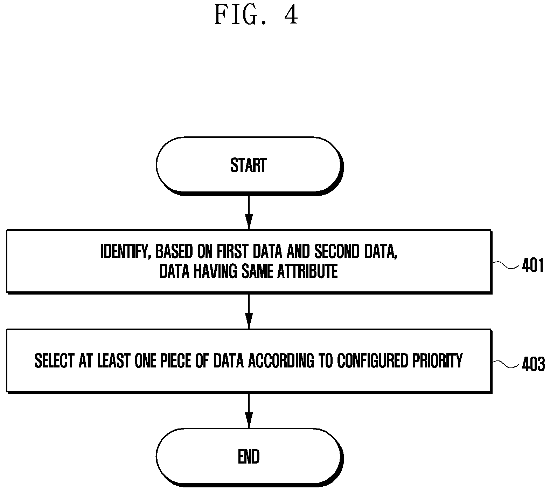

FIG. 4 is a flow chart illustrating a method of selecting one piece of data when pieces of data having the same attribute are acquired according to various embodiments of the disclosure.

According to various embodiments, an electronic device (e.g., the electronic device 101 of FIG. 1 or the electronic device 201 of FIG. 2) may acquire at least one piece of data from at least one external electronic device (e.g., the electronic device 102 or 104 of FIG. 1 or the first external device 220, the second external device 230, or the third external device 240 of FIG. 2) having performed login with the same account. For example, the electronic device 101 may acquire first data from the first external electronic device 220 and acquire second data from the second external electronic device 230. According to an embodiment, when the first data and the second data have the same attribute (e.g., message data or phonebook data), the electronic device 201 may sequentially select one piece of data according to a configured priority.

In operation 401, a processor (e.g., the processor 120 of FIG. 1) of the electronic device 201 may identify, based on the first data and the second data, data having the same attribute. For example, when the first data includes message data of the first external electronic device 220 and the second data includes message data of the second external electronic device 230, the first data and the second data may be data having the same attribute.

In operation 403, the processor 120 may select at least one piece of data according to a configured priority. For example, when the number of synchronizations between the electronic device 201 and the first external electronic device 220 is relatively greater than the number of synchronizations between the electronic device and the second external electronic device 230, the priority of the first data of the first external electronic device 220 is higher than that of the second data. In another example, the processor 120 may integrate the first data and the second data into one piece of data, and select the one integrated piece of data.

According to an embodiment, the electronic device 201 may display, through the display module 160, the first data and the second data in the form of a list, and determine, based on the configured priority, a data display order. For example, data having the relatively highest priority may be displayed on the top of the list.

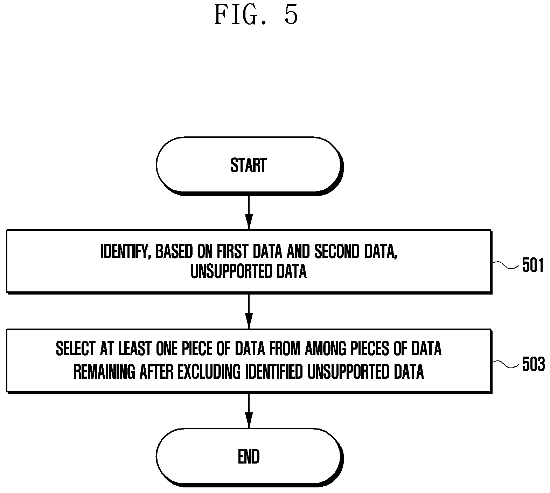

FIG. 5 is a flow chart illustrating a method of selecting one piece of data when unsupported data is included according to various embodiments of the disclosure.

According to various embodiments, an electronic device (e.g., the electronic device 101 of FIG. 1 or the electronic device 201 of FIG. 2) may acquire at least one piece of data from at least one external electronic device (e.g., the electronic device 102 or 104 of FIG. 1 or the first external device 220, the second external device 230, or the third external device 240 of FIG. 2) having performed login with the same account. For example, the electronic device 101 may acquire first data from the first external electronic device 220, and acquire second data from the second external electronic device 230. According to an embodiment, when unsupported data that is not supported in the electronic device 201 is included, the electronic device 201 may select, based on the first data and the second data, at least one piece of data among pieces of data remaining after excluding the unsupported data.

In operation 501, a processor (e.g., the processor 120 of FIG. 1) of the electronic device 201 may identify, based on the first data and the second data, unsupported data. For example, the processor 120 may identify, based on the first data and the second data, data which is difficult to be processed, under an operating system. When the unsupported data is included in the first data, the processor 120 may exclude the unsupported data from the first data.

In operation 503, the processor 120 may select at least one piece of data among pieces of data remaining after excluding the identified unsupported data.

According to an embodiment, the electronic device 201 may display, through the display module 160, the first data and the second data in the form of a list, and may display the unsupported data so as to disable a selection of the unsupported data. For example, the unsupported data may be displayed in a selection inactive state so as to disable a selection input.

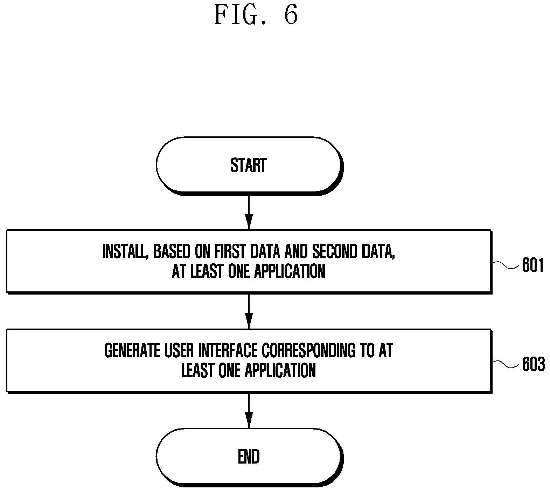

FIG. 6 is a flow chart illustrating a method of installing, based on data acquired from an external electronic device, an application and generating a user interface corresponding to the application according to various embodiments of the disclosure.

According to various embodiments, an electronic device (e.g., the electronic device 101 of FIG. 1 or the electronic device 201 of FIG. 2) may acquire at least one piece of data from at least one external electronic device (e.g., the electronic device 102 or 104 of FIG. 1 or the first external device 220, the second external device 230, or the third external device 240 of FIG. 2) having performed login with the same account. For example, the electronic device 101 may acquire first data from the first external electronic device 220, and acquire second data from the second external electronic device 230. According to an embodiment, the electronic device 201 may identify, based on the first data and the second data, at least one application that can be utilized, and may display, through a display module (e.g., the display module 160 of FIG. 1), the identified at least one application.

In operation 601, a processor (e.g., the processor 120 of FIG. 1) of the electronic device 201 may install, based on the first data and the second data, at least one application that can be utilized. For example, when the first data includes phonebook data and the second data includes message data, the processor 120 may identify at least one application which can utilize both the phonebook data and the message data, and install the identified at least one application in a memory (e.g., the memory 130 of FIG. 1). In another example, the processor 120 may recommend installation of the at least one application to a user while displaying, through the display module 160, the identified at least one application. The processor 120 may install the application in the memory 130 in response to a selection of the user.

In operation 603 the processor 120 may generate a user interface corresponding to the at least one application.

According to an embodiment, the electronic device 201 may identify, based on at least one piece of data among the first data and the second data, an application that can be utilized. For example, when the first data is phonebook data, the processor 120 may identify a call application related to the phonebook data, and when the second data is a watch face data, the processor 120 may identify an application for providing a watch widget, which his related to the watch face. According to an embodiment, the processor 120 may integrate or individually distinguish the first data and the second data, and may identify, based on the distinguished data, the application which can be utilized.

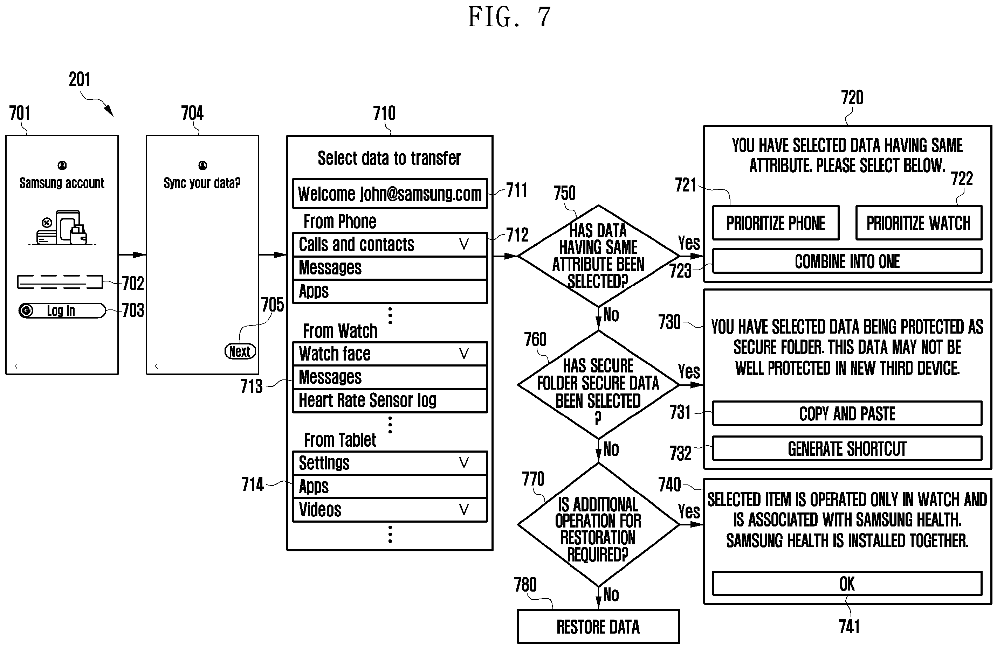

FIG. 7 illustrates an example of a method of selecting at least one piece of data among pieces of data acquired from multiple external electronic devices and utilizing the selected data according to various embodiments of the disclosure.

Referring to FIG. 7, an electronic device (e.g., the electronic device 101 of FIG. 1 or the electronic device 201 of FIG. 2) may log onto, based on a first account, a server (e.g., the server 108 of FIG. 1 or the server 210 of FIG. 2), and acquire at least one piece of data from multiple external electronic devices (e.g., the electronic devices 102 and 104 of FIG. 1 and the first external device 220, the second external device 230, and the third external device 240 of FIG. 2).

Referring to FIG. 7, a processor (e.g., the processor 120 of FIG. 1) of the electronic device 201 may display, through a display module (e.g., the display module 160 of FIG. 1), a first user interface 701 for performing login with a first account. For example, the first user interface 701 may include an input window 702 for inputting the first account and a login button 703 for performing a login operation. The processor 120 may identify the first account input by a user, in response to the input of the login button 703, and identify an external electronic device having performed login with the identified first account. The processor 120 may display, through the display module 160, a second user interface 704 for determining whether synchronization with the external electronic device is performed. For example, the second user interface 704 may include a synchronization button 705 for synchronization with the external electronic device. The processor 120 may display, in response to the synchronization button 705, a third user interface 710 in which at least one piece of data acquired from the external electronic device is included in the form of a list.

For example, the third user interface 710 may include a first account 711 (e.g., "john@samsung.com"), multiple synchronized external electronic devices (e.g., a first device (phone), a second device (watch), and a third device (tablet device)), and at least one piece of data (e.g., a first data set 712, a second data set 713, and a third data set 714) acquired from the external electronic devices. The processor 120 may display, through the display module 160, the third user interface 710, and may identify at least one piece of data selected by a user. For example, the user may select "calls and contact" from the first data set 712, select "watch face" from the second data set 713, and select "settings" and "videos" from the third data set 714. According to an embodiment, the electronic device 201 may provide the user with the at least one piece of data acquired from the external electronic device, and select at least one piece of data selected by the user.

In operation 750, the processor 120 may identify whether data pieces having the same attribute are included in the selected data. If the data pieces having the same attribute are included (for example, if "messages" (first message) is selected from the first data set 712 and "messages" (second message) is selected from the second data set 713), the processor 120 may display a first notification message 720 for selecting at least one of the first message of the first data set 712 and the second message of the second data set 713. For example, the first notification message 720 may include a first option 721 for selecting the first message of the first data set 712, a second option 722 for selecting the second message of the second data set 713, and a third option 723 for integrating the first message and the second message into one. For example, the first message and the second message having the same attribute may be integrated. According to an embodiment, when the data pieces having the same attribute are included in the selected data, the electronic device 201 may provide the user with an option for processing data.

In operation 760, the processor 120 may identify whether secure data such as "secure folder" is included in the selected data. If the secure data is included (for example, if "setting" configured as secure data is selected from the third data set 714), the processor 120 may display a second notification message 730 on the secure data. For example, the second notification message 730 may include a first option 731 for copying and pasting the secure data and a second option 732 for generating a shortcut icon for the secure data. According to an embodiment, if the secure data is included in the selected data, the electronic device 201 may provide the user with an option for processing the secure data.

In operation 770, the processor 120 may identify whether data (e.g., health data) requiring an additional operation for restoration is included in the selected data. If the data (e.g., health data) requiring an additional operation for restoration is included (for example, if "heart rate sensor log" based on a biometric sensor is selected from the second data set 713), the processor 120 may display a third notification message 740 relating to "health data". For example, the third notification message 740 may include a guide message for recommending an application for utilizing "health data" under an operating system of the electronic device 201, and a response option (741) for the guide message. According to an embodiment, if the data (e.g., health data) requiring an additional operation for restoration is included in the selected data, the electronic device 201 may install an application for utilizing "health data", under the operating system of the electronic device 201.

In operation 770, if the selected data is data requiring no additional operation for restoration, the processor 120 may restore the selected data without an additional operation.

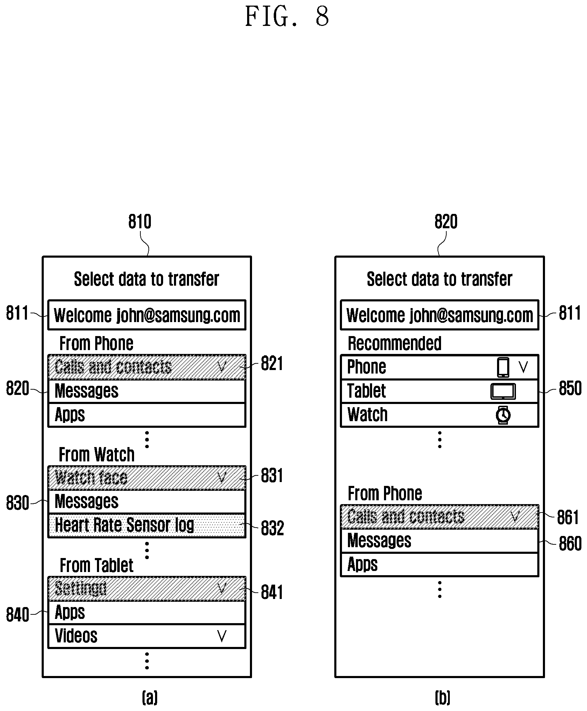

FIG. 8 illustrates an example of a first user interface for selecting at least one piece of data among pieces of data acquired from multiple external electronic devices and a second user interface for selecting one of the multiple external electronic devices and selecting at least one piece of data according to various embodiments of the disclosure.

Referring to part [a] of FIG. 8, a first user interface 810 may include a first account 811 (e.g., "john@samsung.com"), synchronized multiple external electronic devices (e.g., a first device (phone), a second device (watch), and a third device (tablet device)), and at least one piece of data (e.g., a first data set 820, a second data set 830, a third data set 840) acquired from the external electronic devices. A processor (e.g., the processor 120 of FIG. 1) of an electronic device (e.g., the electronic device 101 of FIG. 1 or the electronic device 201 of FIG. 2) may display a first user interface 810 through a display module (e.g., the display module 160 of FIG. 1), and identify at least one piece of data selected by a user.

According to an embodiment, in displaying a data set including the least one piece of data in the form of a list, the processor 120 may dispose data having a high priority on the top of the list, and reflect a highlight effect corresponding to the data having a high priority. For example, the processor 120 may reflect the highlight effect to "calls and contact" 821 in the first data set 820. For example, the processor 120 may change and display, based on the "calls and contact" 821, the type (e.g., font) of the text, the size of the text, the color of the text, and/or the thickness (e.g., bold) of the text. The processor 120 may reflect the highlight effect to a "watch face" 831 in the second data set 830, and may reflect the highlight effect to "settings" 841 in the third data set 840. According to an embodiment, the processor 120 may reflect a different type of a highlight effect to data (e.g., health data or "heart rate sensor log" 832) requiring an additional operation for restoration, or data which cannot be processed in the electronic device 201. According to an embodiment, the processor 120 may reflect a visual effect to data having a high priority and display the same so as to distinguish between the data having a high priority and the other pieces of data.

According to an embodiment, in providing a user with data acquired from multiple external electronic devices, the electronic device 201 may reflect a first highlight effect to data 821, 831, and 841 having relatively high priorities and display the same, and may reflet a second highlight effect to data 832 requiring an additional operation for restoration and display the same. The electronic device 201 individually reflect highlight effects to multiple pieces of data and display the same to enable the user to intuitively distinguish between the multiple pieces of data. The user can intuitively distinguish between the multiple pieces of data, and user convenience can be enhanced.

Referring to part [b] of FIG. 8, a second user interface 820 may include a first account 811 (e.g., "john@samsung.com"), information 850 on a list of synchronized multiple external electronic devices (e.g., a first device (phone), a second device (watch), and a third device (tablet device)), and a data set 860 of external electronic devices selected among the external electronic devices. The processor 120 may display the second user interface 820 through the display module 160, and may identify at least one external electronic device (e.g., phone) selected by a user and the data set 860 for the selected external electronic device.

According to an embodiment, in displaying the data set 860 including the at least one piece of data in the form of a list, the processor 120 may display data 861 having a high priority on the top of the list, and reflect a highlight effect corresponding to the data having a high priority.

According to an embodiment, the electronic device 201 may provide multiple external electronic devices in the form of a list, and select and display the data set 860 for the external electronic device (e.g., phone) selected by the user. The electronic device 201 may reflect, based on the data set 860, a highlight effect data 861 having a relatively priority and display the same. In relation to the external electronic device selected by the user, the electronic device 201 may reflet the highlight effect to multiple pieces of data to enable the user to intuitively distinguish between the multiple pieces of data, and user convenance can be enhanced.

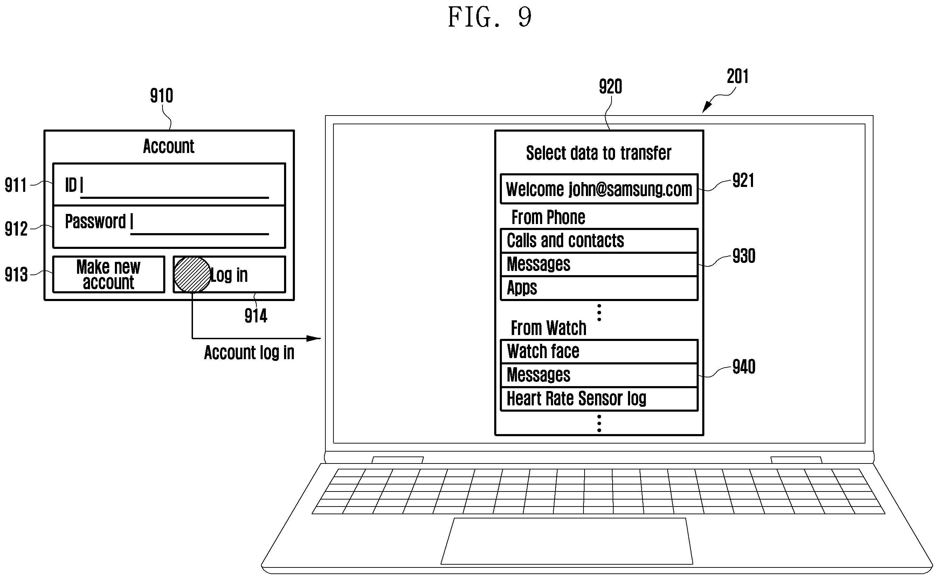

FIG. 9 illustrates an example of a method of accessing a server with a first account by an electronic device and acquiring, based on the first account, data from multiple external electronic devices according to various embodiments of the disclosure.

According to an embodiment, an electronic device (e.g., the electronic device 101 of FIG. 1 or the electronic device 201 of FIG. 2) may log onto, based on a first account, a server (e.g., the server 108 of FIG. 1 or the server 210 of FIG. 2), acquire at least one piece of data from multiple external electronic devices (e.g., the electronic devices 102 and 104 of FIG. 1 and the first external device 220, the second external device 230, and the third external device 240 of FIG. 2), and provide a user with the acquired at least one piece of data.

Referring to FIG. 9, a processor (e.g., the processor 120 of FIG. 1) of the electronic device 201 may display, through a display module (e.g., the display module 160 of FIG. 1), a first user interface 910 including an Id input area 911 and a password input area 912 for performing login with a first account (e.g., "john@samsung.com"). For example, the first user interface 910 may include a first button 913 for generating a new account and a second button 914 for performing login based on an account input in the ID input area 911. According to an embodiment, the processor 120 may access, based on an account (e.g., a first account) and a password of a user input to the first user interface 910, the server 108.

Referring to FIG. 9, the electronic device 201 may display a second user interface 920 through the display module 160 in response to the access to the server 108. For example, the first user interface 920 may include a first account 921 (e.g., "john@samsung.com"), synchronized multiple external electronic devices (e.g., a first device (phone) and a second device (watch)), and at least one piece of data (e.g., a first data set 930 and a second data set 940) acquired from the external electronic devices. According to an embodiment, the electronic device 201 may acquire at least one piece of data from the at least one external electronic device having accessed the server 108 based on the first account 921. The electronic device 201 may distinguish, based on the attribute of data, the priority of data, and whether data can be utilized, the acquired at least one piece of data.

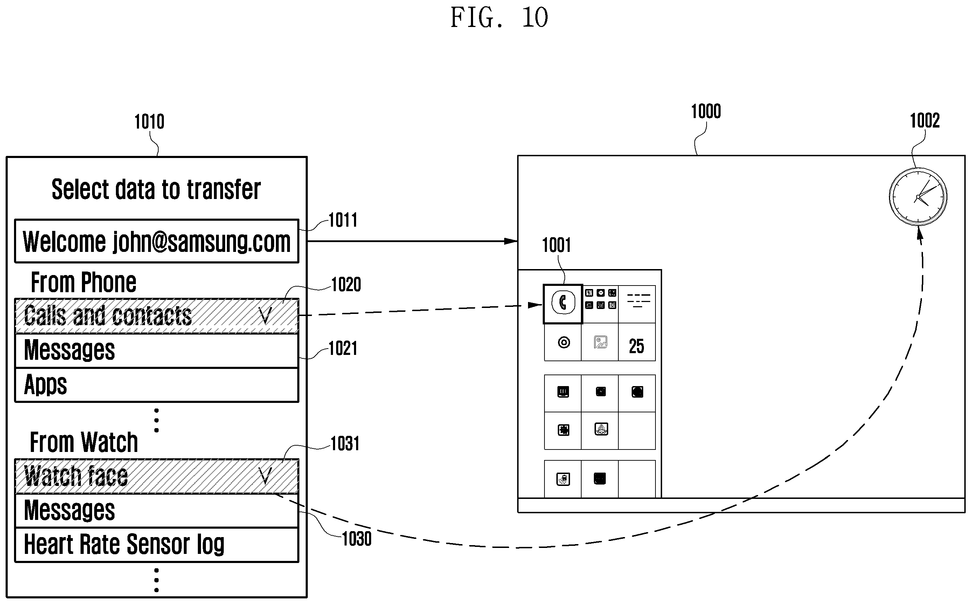

FIG. 10 illustrates an example of a method of installing and displaying an application or installing and displaying a widget, based on data acquired from an external electronic device according to various embodiments of the disclosure.

According to an embodiment, an electronic device (e.g., the electronic device 101 of FIG. 1 or the electronic device 201 of FIG. 2) may acquire at least one piece of data from multiple external electronic devices (e.g., the electronic devices 102 and 104 of FIG. 1 and the first external device 220, the second external device 230, and the third external device 240 of FIG. 2) through a server (e.g., the server 108 of FIG. 1 or the server 210 of FIG. 2), and may generate a user interface based on the acquired at least one piece of data.

Referring to FIG. 10, the electronic device 201 may display a first user interface 1010 through a display module (e.g., the display module 160 of FIG. 1) in response to an operation of synchronization with an external electronic device. For example, the first user interface 1010 may include a first account 1011 (e.g., "john@samsung.com"), synchronized multiple external electronic devices (e.g., a first device (phone) and a second device (watch)), and at least one piece of data (e.g., a first data set 1020 and a second data set 1030) acquired from the external electronic devices. A processor (e.g., the processor 120 of FIG. 1) of the electronic device 201 may identify a selection of first data 1021 (e.g., "calls and contact") of the first data set 1020 and second data 1031 (e.g., "watch face") of the second data set 1030 in response to an input of a user (e.g., the first account 1011).

Referring to FIG. 10, the processor 120 may identify a call-related application corresponding to the first data 1021, and display an icon 1001 corresponding to the call-related application on a screen 1000. The processor 120 may identify a watch widget application corresponding to the second data 1031 and display a watch widget icon 1002 on the screen 1000.

According to an embodiment, the processor 120 may determine, based on at least one piece of data acquired from an external electronic device, an application, and add, to a user interface (e.g., the screen 1000), an icon for executing the determined application and a widget icon for the determined application. According to an embodiment, the processor 120 may automatically execute an application corresponding to the data to enable the electronic device 201 to continuously utilize the data acquired from the external electronic device.

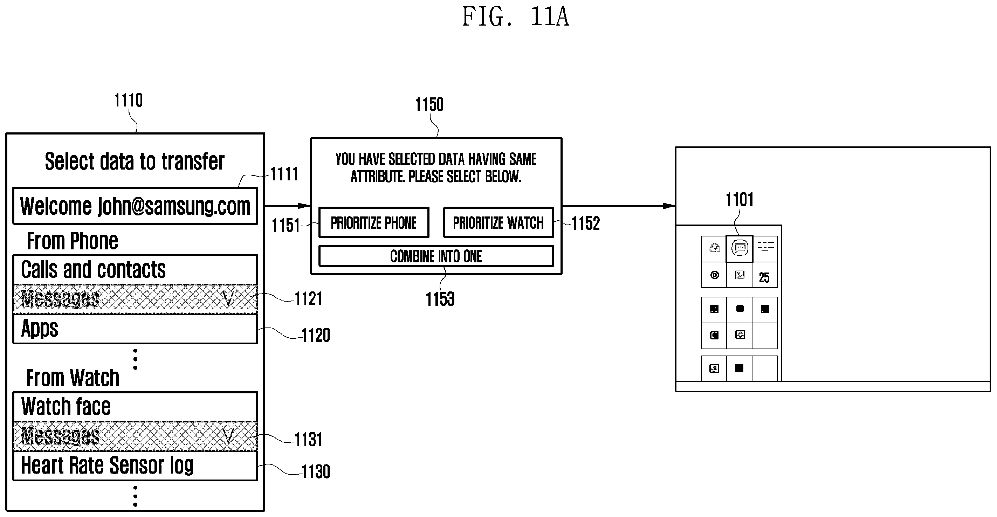

FIG. 11A illustrates an example of a method of selecting at least one piece of data if piece of data acquired from external electronic devices are pieces of data having the same attribute according to various embodiments of the disclosure.

According to an embodiment, an electronic device (e.g., the electronic device 101 of FIG. 1 or the electronic device 201 of FIG. 2) may acquire at least one piece of data from multiple external electronic devices (e.g., the electronic devices 102 and 104 of FIG. 1 and the first external device 220, the second external device 230, and the third external device 240 of FIG. 2) through a server (e.g., the server 108 of FIG. 1 or the server 210 of FIG. 2), and utilize the acquired at least one piece of data in various ways.

Referring to FIG. 11A, the electronic device 201 may display a first user interface 1110 through a display module (e.g., the display module 160 of FIG. 1) in response to an operation of synchronization with an external electronic device. For example, the first user interface 1110 may include a first account 1111 (e.g., "john@samsung.com"), synchronized multiple external electronic devices (e.g., a first device (phone) and a second device (watch)), and at least one piece of data (e.g., a first data set 1120 and a second data set 1130) acquired from the external electronic devices. A processor (e.g., the processor 120 of FIG. 1) of the electronic device 201 may identify a selection of first data 1121 (e.g., "messages") of the first data set 1120 and second data 1131 (e.g., "messages") of the second data set 1130 in response to an input of a user (e.g., the first account 1111). The first data 1121 and the second data 1131 may be distinguished as piece of data having the same attribute (e.g., message-related data).

Referring to FIG. 11A, the processor 120 may identify that pieces of data having the same attribute are selected, and display a first notification message 1150. For example, the first notification message 1150 may include a first option 1151 for selecting the first data 1121, a second option 1152 for selecting the second data 1131, and a third option 1153 for integrating the first data 1121 and the second data 1131 into one. The first data 1121 and the second data 1131 are pieces of data having the same attribute, and may thus be integrated. According to an embodiment, the processor 120 may display a message icon 1101 corresponding to a message-related application on a screen in response to a user selection of the first notification message 1150. For example, when the message icon 1101 is selected, the processor 120 may execute the message-related application and display, based on the user selection, message data.

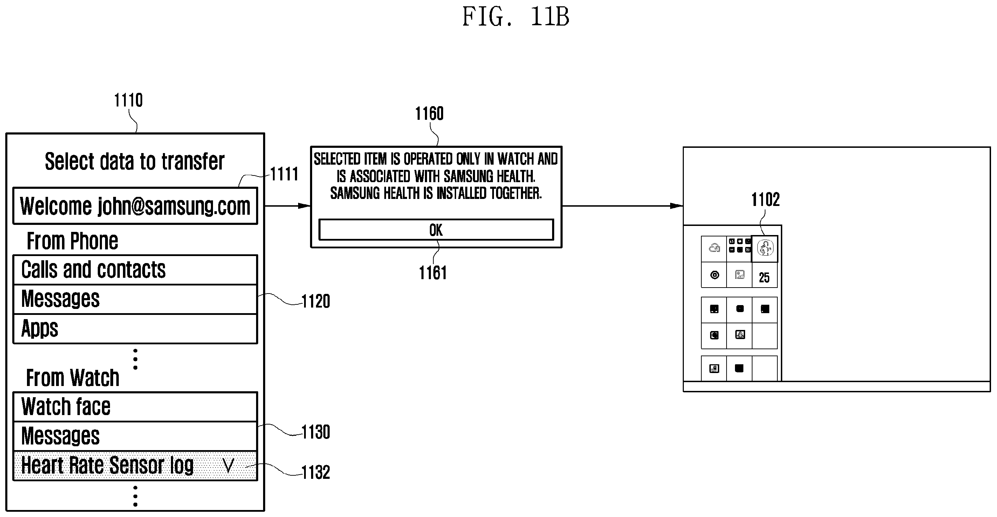

FIG. 11B illustrates an example of a method of executing, based on data acquired from an external electronic device, an additional operation for restoration according to various embodiments of the disclosure.

Referring to FIG. 11B, the electronic device 201 may display a first user interface 1110 through the display module 160 in response to an operation of synchronization with an external electronic device. For example, the first user interface 1110 may include a first account 1111 (e.g., "john@samsung.com"), synchronized multiple external electronic devices (e.g., a first device (phone) and a second device (watch)), and at least one piece of data (e.g., a first data set 1120 and a second data set 1130) acquired from the external electronic devices. The second data set 1130 may include data (e.g., health data (heart rate sensor log) 1132) requiring an additional operation for restoration. The processor 120 may reflect a highlight effect to the health data 1132 and display the same to distinguish between the health data and other data. For example, the processor 120 may reflect a highlight effect in a scheme of changing the type (e.g., font) of text, the size of text, the color of text, and/or the thickness (e.g., bold) of text of the health data 1132, and display the same. The processor 120 may reflect a shadow effect to distinguish between a partial area including the health data 1132 and the other areas and display the same.

Referring to FIG. 11B, the processor 120 may identify that the health data 1132 has been selected, and display a second notification message 1160. For example, the second notification message 1160 may include a guide message of recommending an application for utilizing the health data 1132 and a response option 1161 for the guide message, under an operating system (Window operating system) of the electronic device 201. According to an embodiment, when data (e.g., the health data 1132) requiring an additional operation for restoration is selected from among data acquired from an external electronic device, the electronic device 201 may install an application for utilizing the health data 1132, under an operating system of the electronic device 201. The electronic device 201 may display a health icon 1102 corresponding to the installed application on a screen.

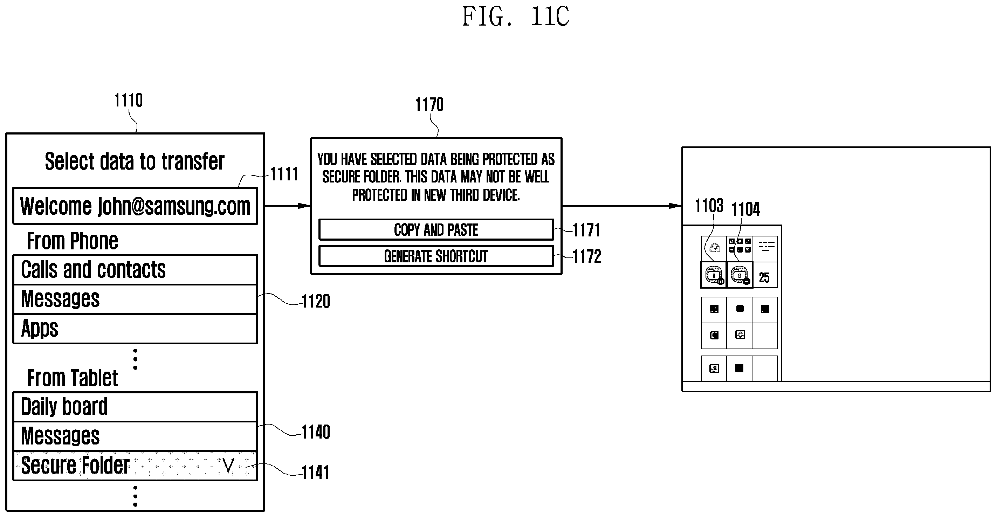

FIG. 11C illustrates an example of a method of configuring, based on secure data acquired from an external electronic device, a user interface according to various embodiments of the disclosure.

Referring to FIG. 11C, the electronic device 201 may display a first user interface 1110 through the display module 160 in response to an operation of synchronization with an external electronic device. For example, the first user interface 1110 may include a first account 1111 (e.g., "john@samsung.com"), synchronized multiple external electronic devices (e.g., a first device (phone) and a third device (tablet device)), and at least one piece of data (e.g., a first data set 1120 and a third data set 1140) acquired from the external electronic devices. The third data set 1140 may include secure data (e.g., secure folder 1141). The processor 120 may reflect a highlight effect to the secure data 1141 to distinguish between the secure data and the other data and display the same.

Referring to FIG. 11C, the processor 120 may identify that the secure data 1141 has been selected, and display a third notification message 1170. For example, the third notification message 1170 may include a first option 1171 for copying and pasting the secure data 1141 and a second option 1172 for generating a shortcut icon for the secure data 1141. According to an embodiment, when the secure data 1141 is selected, the electronic device 201 may provide a user with an option for processing the secure data.

Referring to FIG. 11C, the processor 120 may display icons 1103 and 1104 for accessing secure data 1141 on a screen. For example, the icons may be divided into a first icon 1103 for accessing secure data of a first device (phone) and a second icon 1104 for accessing secure data of a third device (tablet device). According to an embodiment, the electronic device 201 may identify the distance from an external electronic device (e.g., a first device (phone) or a third device (tablet device)) through a communication module (e.g., the communication module 190 of FIG. 1), and when the external electronic device is located within the configured distance, the electronic device may allow access to the first icon 1103 and the second icon 1104. For example, the processor 120 may change the colors of the first icon 1103 and the second icon 1104, and may intuitively display, to the user, that access to the secure data is possible.

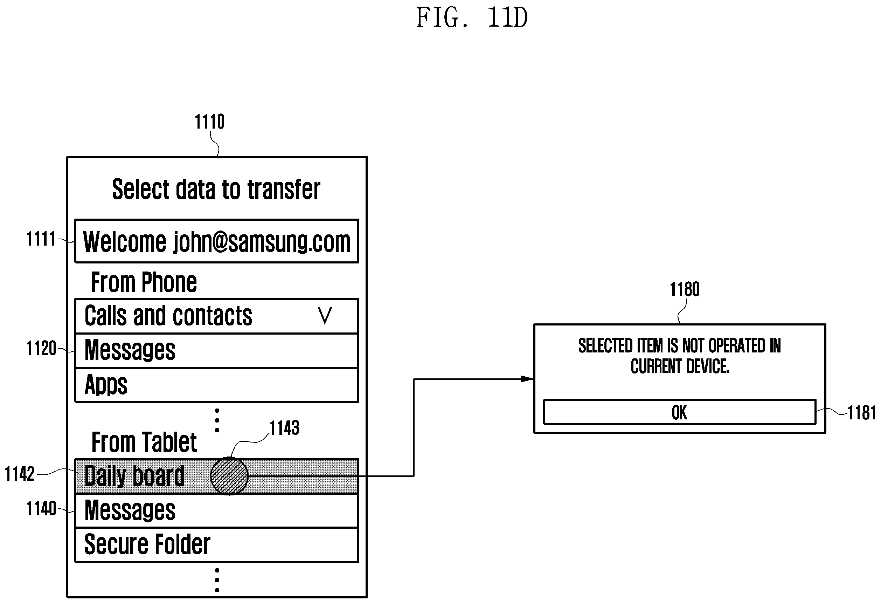

FIG. 11D illustrates an example of a method of displaying data not supported by an electronic device among piece of data acquired from an external electronic device according to various embodiments of the disclosure.

Referring to FIG. 11D, the electronic device 201 may display a first user interface 1110 through the display module 160 in response to an operation of synchronization with an external electronic device. For example, the first user interface 1110 may include a first account 1111 (e.g., "john@samsung.com"), synchronized multiple external electronic devices (e.g., a first device (phone) and a third device (tablet device)), and at least one piece of data (e.g., a first data set 1120 and a third data set 1140) acquired from the external electronic devices. The third data set 1140 may include unsupported data 1142 which is difficult to be processed, under an operating system of the electronic device 201. The processor 120 may reflect a highlight effect to the unsupported data 1142 to distinguish between the unsupported data and other data and display the same. For example, the processor 120 may reflect the highlight effect in a scheme of applying a contrast effect to the unsupported data 1142 and displaying the data darker, and display the same. In another example, the processor 120 may configure a partial area including the unsupported data 1142 in a touch inactive state, and may ignore a user touch input to the partial area in the touch inactive state.

Referring to FIG. 11D, the processor 120 may identify that the unsupported data 1142 has been selected 1143, and display a fourth notification message 1180. For example, the fourth notification message 1180 may notify that the unsupported data 1142 is difficult to be processed to the user. The fourth notification message 1180 may include a response option 1181 for identification of the user.

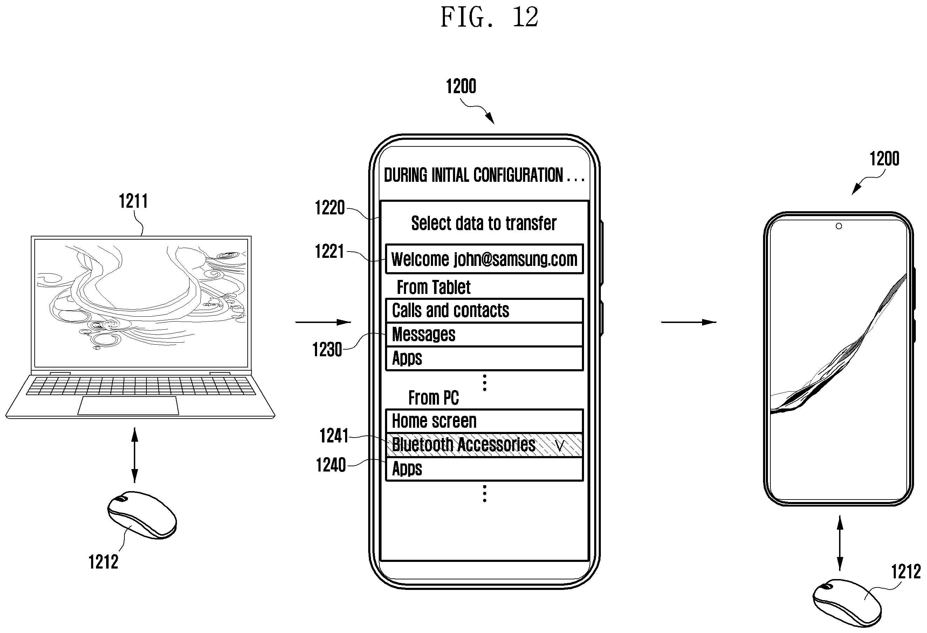

FIG. 12 illustrates an example of a method of identifying a second external electronic device operatively connected through a first external electronic device and operatively connecting the identified second external electronic device and an electronic device according to various embodiments of the disclosure.

According to an embodiment, an electronic device 1200 (e.g., the electronic device 101 of FIG. 1 or the electronic device 201 of FIG. 2) may acquire at least one piece of data from multiple external electronic devices (e.g., the electronic devices 102 and 104 of FIG. 1 and the first external device 220, the second external device 230, and the third external device 240 of FIG. 2) through a server (e.g., the server 108 of FIG. 1 or the server 210 of FIG. 2), and utilize the acquired at least one piece of data in various ways.

Referring to FIG. 12, a first external electronic device 1211 (e.g., a computer) and a second external electronic device 1212 (e.g., a peripheral device or a mouse) may be operatively connected based on a Bluetooth scheme. For example, the first external electronic device 1211 may store, based on a short-distance communication scheme, data on a connected peripheral device in a memory.

Referring to FIG. 12, the electronic device 1200 may display a first user interface 1220 through a display module (e.g., the display module 160 of FIG. 1) in response to an operation of synchronization with an external electronic device (e.g., the first external electronic device 1211). For example, the first user interface 1220 may include a first account 1221 (e.g., "john@samsung.com"), synchronized multiple external electronic devices (e.g., a first device (tablet device), a second device (the first external electronic device 1211), and a computer (PC)), and at least one piece of (e.g., a first data set 1230 and a second data set 1240) acquired from the external electronic device. The second data set 1240 may include data on a peripheral device (Bluetooth accessories) 1241 connected in the first external electronic device 1211 based on a Bluetooth scheme.

Referring to FIG. 12, a processor (e.g., the processor 120 of FIG. 1) of the electronic device 1200 may identify a user input to the data on the peripheral device (Bluetooth accessories) 1241, and execute connection between the electronic device 1200 and the second external electronic device 1212. According to an embodiment, the user can intuitively identify the peripheral device connected to the first external electronic device 1211 from the electronic device 1200, and may perform an operation of connection between the electronic device 1200 and the peripheral device through one input. User convenience cam be enhanced.

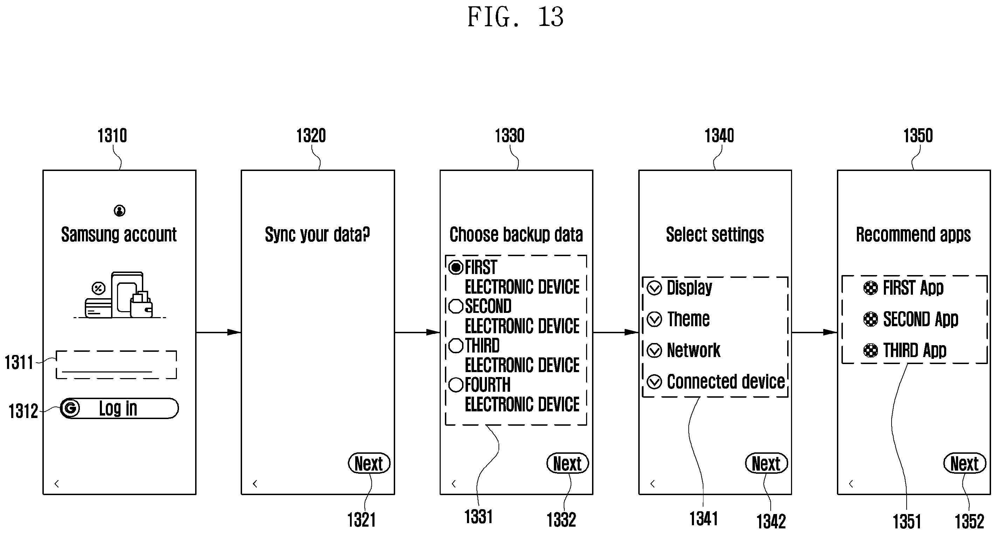

FIG. 13 illustrates an example of a method of acquiring data from multiple external electronic devices and utilizing the acquired data by an electronic device according to various embodiments of the disclosure.

According to an embodiment, an electronic device (e.g., the electronic device 101 of FIG. 1 or the electronic device 201 of FIG. 2) may acquire at least one piece of data from multiple external electronic devices (e.g., the electronic devices 102 and 104 of FIG. 1 and the first external device 220, the second external device 230, and the third external device 240 of FIG. 2) through a server (e.g., the server 108 of FIG. 1 or the server 210 of FIG. 2).

Referring to FIG. 13, a processor (e.g., the processor 120 of FIG. 1) of the electronic device 201 may display, through a display module (e.g., the display module 160 of FIG. 1) a first user interface 1310 for performing login with a first account. For example, a first user interface 1310 may include an ID input area 1311 for inputting a first account and a login input button 1312 for performing login with the first account. The processor 120 may identify a first account input in the ID input area in response to an input to the login input button 1312, and display a second user interface 1320 for performing an operation of synchronization based on the first account. The second user interface 1320 may include a synchronization button 1321 for performing an operation of synchronization. The processor 120 may display a third user interface 1330 in response to an input to the synchronization button 1321. The third user interface 1330 may includer a synchronized external electronic device list 1331. The processor 120 may identify, based on the external electronic device list 1331, at least one external electronic device selected by a user input. The processor 120 may display a fourth user interface 1340 in response to an input to a selection determination button 1332 of the external electronic device. The fourth user interface 1340 may include a data set list 1341 for selecting at least one of multiple data sets (e.g., a display-related data set, a theme-related data set, a network-related data set, and/or a connected device-related data set) for the selected external electronic device. The processor 120 may identify, based on the data set list 1341, at least one data set selected by the user input. The processor 120 may display a fifth user interface 1350 in response to an input to the selection determination button 1342 of the data set. The fifth user interface 1350 may include an application list 1351 (e.g., a first APP, a second APP, and a third APP) which can be utilized based on the selected data set. The processor 120 may identify, based on the application list 1351, at least one application selected by the user input. The processor 120 may install the selected application in a memory (e.g., the memory 130 of FIG. 1) in response to an input to an application determination button 1352. For example, when the selected application is installed in the memory 130, the processor 120 may execute the selected application.

According to an embodiment, even though the electronic device 201 is designed with a form factor different from that of the external electronic device, or is operated by an operating system different from that of the external electronic device, the electronic device 201 may perform an operation of synchronization with the external electronic device, and acquire least one piece of data from the synchronized external electronic device. According to an embodiment, when the user operates multiple external electronic devices together, the electronic device 201 may perform the operation of synchronization with the at least one external electronic device, and acquire at least one piece of data from the at least one external electronic device. According to an embodiment, according to a pre-configured interface configuration reference, the electronic device 201 may process or transform the acquired at least one piece of data. The electronic device 201 may design, based on the processed or transformed at least one piece of data, a user interface so as to be appropriate to the electronic device 201.

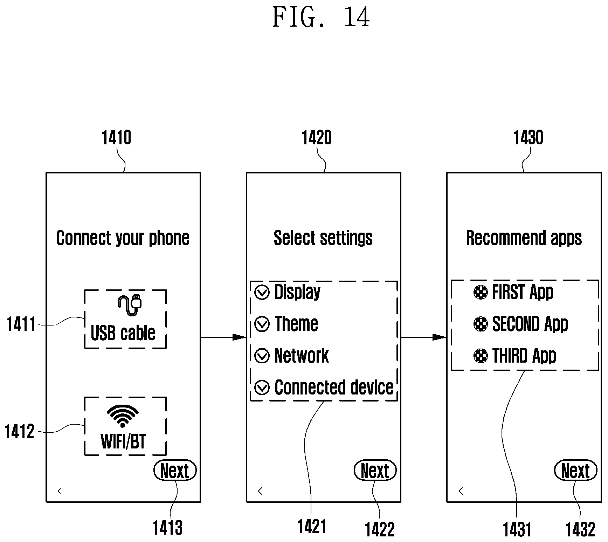

FIG. 14 illustrates an example of a method of selecting a method of connecting to multiple external electronic devices, acquiring data through the selected connection method, and utilizing the acquired data according to various embodiments of the disclosure.

According to an embodiment, an electronic device (e.g., the electronic device 101 of FIG. 1 or the electronic device 201 of FIG. 2) may acquire at least one piece of data from multiple external electronic devices (e.g., the electronic devices 102 and 104 of FIG. 1 and the first external device 220, the second external device 230, and the third external device 240 of FIG. 2) by selecting one of a wired communication scheme and a wireless communication scheme.

Referring to FIG. 14, a processor (e.g., the processor 120 of FIG. 1) of the electronic device 201 may display, through a display module (e.g., the display module 160 of FIG. 1), a first user interface 1410 for selecting one of a wired communication scheme and a wireless communication scheme. For example, the first user interface 1410 may include a button for selecting one of a wired communication scheme 1411 through a USB cable and a wireless communication scheme 1412 through Bluetooth. The processor 120 may display a second user interface 1420 in response to an input to a communication scheme determination button 1413. The second user interface 1420 may include a data set list 1421 for selecting at least one of multiple data sets (e.g., a display-related data set, a theme-related data set, a network-related data set, and/or a connected device-related data set) according to the determined communication scheme. The processor 120 may identify, based on the data set list 1421, at least one data set selected by a user input. The processor 120 may display a third user interface 1430 in response to an input to a data set selection determination button 1422. The third user interface 1430 may include an application list 1431 (e.g., a first APP, a second APP, and a third APP) which can be utilized based on the selected data set. The processor 120 may identify, based on the application list 1431, the at least one application selected by the user input. The processor 120 may install the selected application in a memory (e.g., the memory 130 of FIG. 1) in response to an input to an application determination button 1432. For example, when the selected application is installed in the memory 130, the processor 120 may execute the selected application.

According to an embodiment, the electronic device 201 may perform an operation of synchronization with an external electronic device through one of a wired communication scheme and a wireless communication scheme, without being limited to a specific communication scheme, and acquire at least one piece of data from the synchronized external electronic device. According to an embodiment, the electronic device 201 may process or transform the acquired at least one piece of data according to a pre-configured interface configuration reference. The electronic device 201 may design, based on the processed or transformed at least one piece of data, a user interface so as to be appropriate to the electronic device 201.

An operation method of an electronic device according to various embodiments may include acquiring, through a communication module 190, first data of a first external electronic device (e.g., the first external electronic device 220 of FIG. 2) and second data of a second external electronic device (e.g., the second external electronic device 230 of FIG. 2) having an account identical to that of the first external electronic device 220, selecting, based on configuration reference information (e.g., the configuration reference information 203 of FIG. 2), at least one piece of data from among the first data and the second data, and generating, based on the selected at least one piece of data, a user interface.

The method according to an embodiment may further include storing the first data and the second data in a storage space of a server (e.g., the server 210 of FIG. 2).

According to an embodiment, the acquiring of the first data and the second data may include accessing, based on a first account, the server 210, identifying the first external electronic device 220 and the second external electronic device 230 accessing, based on the first account, the server 210, and acquiring the first data of the first external electronic device 220 and the second data of the second external device 230 through the server 210.

The method according to an embodiment may further include identifying, based on the first data and the second data, whether two or more pieces of data having an identical attribute are included, and in case that the two or more pieces of data having the identical attribute are identified, selecting, based on a configured priority, the two or more pieces of data having the identical attribute.

The method according to an embodiment may further include identifying, based on the first data and the second data, whether security-related data is included, and selecting the security-related data so as to distinguish between security-related data corresponding to the first external electronic device 220 and security-related data corresponding to the second external electronic device 230.

The method according to an embodiment may further include identifying a distance from the first external electronic device 220 through the communication module 190, and in case that the identified distance is within a configured distance, activating the security-related data so as to enable the security-related data corresponding to the first external electronic device 220 to be identified.

The method according to an embodiment may further include identifying an operating system scheme of operating the electronic device 201, identifying, based on the first data and the second data, unsupported data corresponding to the identified operating system scheme, and generating the user interface to prevent the identified unsupported data from being selected.

The method according to an embodiment may further include identifying, based on the first data and the second data, at least one application, downloading the identified at least one application through the communication module 190, and executing the at least one application.

The method according to an embodiment may further include identifying, based on the first data, a peripheral electronic device operatively connected to the first external electronic device 220, and operatively connecting to the identified peripheral electronic device through the communication module 190.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. It is intended that features described with respect to separate embodiments, or features recited in separate claims, may be combined unless such a combination is explicitly specified as being excluded or such features are incompatible. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. Any previously mentioned variation is within the invention only insofar encompassed by the scope of the appended claims.

## Claims

1. An electronic device (201) comprising:
a communication circuit (190) configured to communicate with at least one external electronic device (220, 230, 240);
memory (130); and
one or more processors (120) communicatively coupled to the communication circuit (190) and the memory (130),
wherein the memory (130) stores one or more computer programs including computer-executable instructions that, when executed by the one or more processors (120), cause the electronic device (201) to:
acquire, through the communication circuit (190), first data of a first external electronic device (220) and second data of a second external electronic device (230) having an account identical to that of the first external electronic device (220),
identify configuration reference information (203) corresponding to the account, wherein the configuration reference information (203) comprises information related to an operating system of the electronic device (201),
select, based on the identified configuration reference information (203), at least one piece of data that is supported by the operating system of the electronic device (201) from among the first data and the second data, by disabling the selection of data identified as unsupported data, and
generate, based on the selected at least one piece of data, a user interface.

2. The electronic device (201) of claim 1, further comprising:
a server configured to transmit or receive data between the electronic device (201) and the at least one external electronic device (220, 230, 240),
wherein the first data and the second data are stored in a storage space of the server.

3. The electronic device (201) of claim 2, wherein the one or more computer programs further comprise computer-executable instructions to:
access the server, based on a first account,
identify the first external electronic device (220) and the second external electronic device (230) accessing, based on the first account, the server, and
acquire first data of the first external electronic device (220) and second data of the second external device (230) through the server.

4. The electronic device (201) of claim 1, wherein the one or more computer programs further comprise computer-executable instructions to:
identify, based on the first data and the second data, whether two or more pieces of data having an identical attribute are included, and
in case that the two or more pieces of data having the identical attribute are identified, select, based on a configured priority, the two or more pieces of data having the identical attribute.

5. The electronic device (201) of claim 1, wherein the one or more computer programs further comprise computer-executable instructions to:
identify, based on the first data and the second data, whether security-related data is included,
select the security-related data so as to distinguish between security-related data corresponding to the first external electronic device (220) and security-related data corresponding to the second external electronic device (230),
identify a distance from the first external electronic device (220) through the communication circuit (190), and
in case that the identified distance is within a configured distance, activate the security-related data so as to enable the security-related data corresponding to the first external electronic device (220) to be identified.

6. The electronic device (201) of claim 1, wherein the one or more computer programs further comprise computer-executable instructions to:
identify an operating system scheme of operating the electronic device (201),
identify, based on the first data and the second data, unsupported data corresponding to the identified operating system scheme, and
generate the user interface to prevent the identified unsupported data from being selected.

7. The electronic device (201) of claim 6, wherein the one or more computer programs further comprise computer-executable instructions to:
identify, based on the first data and the second data, whether data requiring an additional operation for restoration is included, and
in case that the data requiring the additional operation for restoration is included, perform, based on the identified operating system scheme, a restoration operation for the data.

8. The electronic device (201) of claim 1, wherein the one or more computer programs further comprise computer-executable instructions to:
identify, based on the first data and the second data, at least one application,
download the identified at least one application through the communication circuit (190), and
execute the at least one application.

9. The electronic device (201) of claim 1, wherein the one or more computer programs further comprise computer-executable instructions to:
identify, based on the first data, a peripheral electronic device operatively connected to the first external electronic device (220), and
operatively connect to the identified peripheral electronic device through the communication circuit (190).

10. An operation method at an electronic device (201), the operation method comprising:
acquiring (301), by the electronic device (201) through a communication circuit (190), first data of a first external electronic device (220) and second data of a second external electronic device (230) having an account identical to that of the first external electronic device (220);
identifying (303) configuration reference information (203) corresponding to the account, wherein the configuration reference information (203) comprises information related to an operating system of the electronic device (201);
selecting (305), by the electronic device (201), based on the identified configuration reference information (203), at least one piece of data that is supported by the operating system of the electronic device (201) from among the first data and the second data by disabling the selection of data identified as unsupported data; and
generating (307), by the electronic device (201), based on the selected at least one piece of data, a user interface.

11. The operation method of claim 10, wherein the acquiring of the first data and the second data comprises:
accessing a server, based on a first account;
identifying the first external electronic device (220) and the second external electronic device (230) accessing, based on the first account, the server; and
acquiring the first data of the first external electronic device (220) and the second data of the second external device (230) through the server.

12. The operation method of claim 10, further comprising:
identifying, based on the first data and the second data, whether two or more pieces of data having an identical attribute are included; and
in case that the two or more pieces of data having the identical attribute are identified, selecting, based on a configured priority, the two or more pieces of data having the identical attribute.

13. The operation method of claim 10, further comprising:
identifying, based on the first data and the second data, whether security-related data is included;
selecting the security-related data so as to distinguish between security-related data corresponding to the first external electronic device (220) and security-related data corresponding to the second external electronic device (230);
identifying a distance from the first external electronic device (220) through the communication circuit (190); and
in case that the identified distance is within a configured distance, activating the security-related data so as to enable the security-related data corresponding to the first external electronic device (220) to be identified.

14. The operation method of claim 10, further comprising:
identifying an operating system scheme of operating the electronic device (201);
identifying, based on the first data and the second data, unsupported data corresponding to the identified operating system scheme; and
generating the user interface to prevent the identified unsupported data from being selected.

## Patentansprüche

1. Elektronische Vorrichtung (201), die Folgendes umfasst:
eine Kommunikationsschaltung (190), die so konfiguriert ist, dass sie mit mindestens einer externen elektronischen Vorrichtung (220, 230, 240) kommuniziert;
einen Speicher (130); und
einen oder mehrere Prozessoren (120), die mit der Kommunikationsschaltung (190) und dem Speicher (130) kommunikativ gekoppelt sind,
wobei der Speicher (130) ein oder mehrere Computerprogramme speichert, die computerausführbare Anweisungen enthalten, die, wenn sie von dem einen oder den mehreren Prozessoren (120) ausgeführt werden, die elektronische Vorrichtung (201) zu Folgendem veranlassen:
Erfassen erster Daten einer ersten externen elektronischen Vorrichtung (220) und zweiter Daten einer zweiten externen elektronischen Vorrichtung (230) mit einem Konto, das mit dem der ersten externen elektronischen Vorrichtung (220) identisch ist, über die Kommunikationsschaltung (190),
Identifizieren von Konfigurationsreferenzinformationen (203), die dem Konto entsprechen, wobei die Konfigurationsreferenzinformationen (203) Informationen in Bezug auf ein Betriebssystem der elektronischen Vorrichtung (201) umfassen,
Auswählen mindestens eines Datenelements, das von dem Betriebssystem der elektronischen Vorrichtung (201) unterstützt wird, aus den ersten Daten und den zweiten Daten durch Deaktivieren der Auswahl von Daten, die als nicht unterstützte Daten identifiziert wurden, basierend auf den identifizierten Konfigurationsreferenzinformationen (203), und
Erzeugen einer Benutzeroberfläche basierend auf dem ausgewählten mindestens einen Datenelement.

2. Elektronische Vorrichtung (201) nach Anspruch 1, die ferner Folgendes umfasst:
einen Server, der so konfiguriert ist, dass er Daten zwischen der elektronischen Vorrichtung (201) und der mindestens einen externen elektronischen Vorrichtung (220, 230, 240) überträgt oder empfängt,
wobei die ersten Daten und die zweiten Daten in einem Speicherplatz des Servers gespeichert werden.

3. Elektronische Vorrichtung (201) nach Anspruch 2, wobei das eine oder die mehreren Computerprogramme ferner computerausführbare Anweisungen für Folgendes umfassen:
Zugreifen auf den Server basierend auf einem ersten Konto,
Identifizieren der ersten externen elektronischen Vorrichtung (220) und der zweiten externen elektronischen Vorrichtung (230), die basierend auf dem ersten Konto auf den Server zugreifen, und
Erfassen erster Daten der ersten externen elektronischen Vorrichtung (220) und zweiter Daten der zweiten externen Vorrichtung (230) über den Server.

4. Elektronische Vorrichtung (201) nach Anspruch 1, wobei das eine oder die mehreren Computerprogramme ferner computerausführbare Anweisungen für Folgendes umfassen:
Identifizieren, ob zwei oder mehr Datenelemente mit einem identischen Attribut enthalten sind, basierend auf den ersten Daten und den zweiten Daten, und
falls die zwei oder mehreren Datenelemente mit dem identischen Attribut identifiziert werden, Auswählen der zwei oder mehreren Datenelemente mit dem identischen Attribut basierend auf einer konfigurierten Priorität.

5. Elektronische Vorrichtung (201) nach Anspruch 1, wobei das eine oder die mehreren Computerprogramme ferner computerausführbare Anweisungen für Folgendes umfassen:
Identifizieren, ob sicherheitsrelevante Daten enthalten sind, basierend auf den ersten Daten und den zweiten Daten,
Auswählen der sicherheitsrelevanten Daten, um zwischen sicherheitsrelevanten Daten, die der ersten externen elektronischen Vorrichtung (220) entsprechen, und sicherheitsrelevanten Daten, die der zweiten externen elektronischen Vorrichtung (230) entsprechen, zu unterscheiden,
Identifizieren eines Abstands von der ersten externen elektronischen Vorrichtung (220) über die Kommunikationsschaltung (190), und
falls der identifizierte Abstand innerhalb eines konfigurierten Abstands liegt, Aktivieren der sicherheitsrelevanten Daten, um die Identifizierung der sicherheitsrelevanten Daten zu ermöglichen, die der ersten externen elektronischen Vorrichtung (220) entsprechen.

6. Elektronische Vorrichtung (201) nach Anspruch 1, wobei das eine oder die mehreren Computerprogramme ferner computerausführbare Anweisungen für Folgendes umfassen:
Identifizieren eines Betriebssystemschemas zum Betreiben der elektronischen Vorrichtung (201),
Identifizieren nicht unterstützter Daten, die dem identifizierten Betriebssystemschema entsprechen, basierend auf den ersten Daten und den zweiten Daten, und
Erzeugen der Benutzeroberfläche, um zu verhindern, dass die identifizierten nicht unterstützten Daten ausgewählt werden.

7. Elektronische Vorrichtung (201) nach Anspruch 6,
wobei das eine oder die mehreren Computerprogramme ferner computerausführbare Anweisungen für Folgendes umfassen:
Identifizieren, ob Daten enthalten sind, die einen zusätzlichen Vorgang zur Wiederherstellung erfordern, basierend auf den ersten Daten und den zweiten Daten,
und
falls die Daten, die einen zusätzlichen Vorgang zur Wiederherstellung erfordern, enthalten sind, Ausführen eines Wiederherstellungsvorgangs für die Daten basierend auf dem identifizierten Betriebssystemschema.

8. Elektronische Vorrichtung (201) nach Anspruch 1, wobei das eine oder die mehreren Computerprogramme ferner computerausführbare Anweisungen für Folgendes umfassen:
Identifizieren mindestens einer Anwendung basierend auf den ersten Daten und den zweiten Daten,
Herunterladen der identifizierten mindestens einen Anwendung über die Kommunikationsschaltung (190), und
Ausführen der mindestens einen Anwendung.

9. Elektronische Vorrichtung (201) nach Anspruch 1, wobei das eine oder die mehreren Computerprogramme ferner computerausführbare Anweisungen für Folgendes umfassen:
Identifizieren eines elektronischen Peripheriegeräts, das mit der ersten externen elektronischen Vorrichtung (220) operativ verbunden ist, basierend auf den ersten Daten, und
operatives Verbinden mit dem identifizierten elektronischen Peripheriegerät über die Kommunikationsschaltung (190).

10. Betriebsverfahren an einer elektronischen Vorrichtung (201), wobei das Betriebsverfahren Folgendes umfasst:
Erfassen (301) erster Daten einer ersten externen elektronischen Vorrichtung (220) und zweiter Daten einer zweiten externen elektronischen Vorrichtung (230) mit einem Konto, das mit dem der ersten externen elektronischen Vorrichtung (220) identisch ist, durch die elektronische Vorrichtung (201) über eine Kommunikationsschaltung (190);
Identifizieren (303) von Konfigurationsreferenzinformationen (203), die dem Konto entsprechen, wobei die Konfigurationsreferenzinformationen (203) Informationen in Bezug auf ein Betriebssystem der elektronischen Vorrichtung (201) umfassen;
Auswählen (305) mindestens eines Datenelements, das von dem Betriebssystem der elektronischen Vorrichtung (201) unterstützt wird, aus den ersten Daten und den zweiten Daten durch die elektronische Vorrichtung (201) basierend auf den identifizierten Konfigurationsreferenzinformationen (203) durch Deaktivieren der Auswahl von Daten, die als nicht unterstützte Daten identifiziert wurden; und
Erzeugen (307) einer Benutzeroberfläche durch die elektronische Vorrichtung (201) basierend auf dem ausgewählten mindestens einen Datenelement.

11. Betriebsverfahren nach Anspruch 10, wobei das Erfassen der ersten Daten und der zweiten Daten Folgendes umfasst:
Zugreifen auf einen Server basierend auf einem ersten Konto;
Identifizieren der ersten externen elektronischen Vorrichtung (220) und der zweiten externen elektronischen Vorrichtung (230), die basierend auf dem ersten Konto auf den Server zugreifen; und
Erfassen der ersten Daten der ersten externen elektronischen Vorrichtung (220) und der zweiten Daten der zweiten externen Vorrichtung (230) über den Server.

12. Betriebsverfahren nach Anspruch 10, das ferner Folgendes umfasst:
Identifizieren, ob zwei oder mehr Datenelemente mit einem identischen Attribut enthalten sind, basierend auf den ersten Daten und den zweiten Daten; und
falls die zwei oder mehreren Datenelemente mit dem identischen Attribut identifiziert werden, Auswählen der zwei oder mehreren Datenelemente mit dem identischen Attribut basierend auf einer konfigurierten Priorität.

13. Betriebsverfahren nach Anspruch 10, das ferner Folgendes umfasst:
Identifizieren, ob sicherheitsrelevante Daten enthalten sind, basierend auf den ersten Daten und den zweiten Daten;
Auswählen der sicherheitsrelevanten Daten, um zwischen sicherheitsrelevanten Daten, die der ersten externen elektronischen Vorrichtung entsprechen (220), und sicherheitsrelevanten Daten, die der zweiten externen elektronischen Vorrichtung (230) entsprechen, zu unterscheiden;
Identifizieren eines Abstands von der ersten externen elektronischen Vorrichtung (220) über die Kommunikationsschaltung (190); und
falls der identifizierte Abstand innerhalb eines konfigurierten Abstands liegt, Aktivieren der sicherheitsrelevanten Daten, um die Identifizierung der sicherheitsrelevanten Daten zu ermöglichen, die der ersten externen elektronischen Vorrichtung (220) entsprechen.

14. Betriebsverfahren nach Anspruch 10, das ferner Folgendes umfasst:
Identifizieren eines Betriebssystemschemas zum Betreiben der elektronischen Vorrichtung (201);
Identifizieren nicht unterstützter Daten, die dem identifizierten Betriebssystemschema entsprechen, basierend auf den ersten Daten und den zweiten Daten; und
Erzeugen der Benutzeroberfläche, um zu verhindern, dass die identifizierten nicht unterstützten Daten ausgewählt werden.

## Revendications

1. Dispositif électronique (201) comprenant :
un circuit de communication (190) configuré pour communiquer avec au moins un dispositif électronique externe (220, 230, 240) ;
une mémoire (130) ; et
un ou plusieurs processeurs (120) couplés de manière communicative au circuit de communication (190) et à la mémoire (130),
où la mémoire (130) stocke un ou plusieurs programmes informatiques incluant des instructions exécutables par ordinateur qui, lorsqu'elles sont exécutées par l'un ou plusieurs processeurs (120), amènent le dispositif électronique (201) à :
acquérir, par l'intermédiaire du circuit de communication (190), des premières données d'un premier dispositif électronique externe (220) et des deuxièmes données d'un deuxième dispositif électronique externe (230) ayant un compte identique à celui du premier dispositif électronique externe (220),
identifier des informations de référence de configuration (203) correspondant au compte, où les informations de référence de configuration (203) comprennent des informations liées à un système d'exploitation du dispositif électronique (201),
sélectionner, sur la base des informations de référence de configuration identifiées (203), au moins une donnée qui est prise en charge par le système d'exploitation du dispositif électronique (201) parmi les premières données et les deuxièmes données, en désactivant la sélection de données identifiées comme des données non prises en charge, et
générer, sur la base de l'au moins une donnée sélectionnée, une interface utilisateur.

2. Dispositif électronique (201) selon la revendication 1, comprenant en outre :
un serveur configuré pour transmettre ou recevoir des données entre le dispositif électronique (201) et l'au moins un dispositif électronique externe (220, 230, 240),
où les premières données et les deuxièmes données sont stockées dans un espace de stockage du serveur.

3. Dispositif électronique (201) selon la revendication 2, où l'un ou plusieurs programmes informatiques comprennent en outre des instructions exécutables par ordinateur pour :
accéder au serveur, sur la base d'un premier compte,
identifier le premier dispositif électronique externe (220) et le deuxième dispositif électronique externe (230) accédant, sur la base du premier compte, au serveur, et
acquérir des premières données du premier dispositif électronique externe (220) et des deuxièmes données du deuxième dispositif externe (230) par l'intermédiaire du serveur.

4. Dispositif électronique (201) selon la revendication 1, où l'un ou plusieurs programmes informatiques comprennent en outre des instructions exécutables par ordinateur pour :
identifier, sur la base des premières données et des deuxièmes données, si deux ou plusieurs données ayant un attribut identique sont incluses, et
dans le cas où les deux ou plusieurs données ayant l'attribut identique seraient identifiées, sélectionner, sur la base d'une priorité configurée, les deux ou plusieurs données ayant l'attribut identique.

5. Dispositif électronique (201) selon la revendication 1, où l'un ou plusieurs programmes informatiques comprennent en outre des instructions exécutables par ordinateur pour :
identifier, sur la base des premières données et des deuxièmes données, si des données relatives à la sécurité sont incluses,
sélectionner les données relatives à la sécurité afin de distinguer entre des données relatives à la sécurité correspondant au premier dispositif électronique externe (220) et des données relatives à la sécurité correspondant au deuxième dispositif électronique externe (230),
identifier une distance par rapport au premier dispositif électronique externe (220) par l'intermédiaire du circuit de communication (190), et
dans le cas où la distance identifiée se trouverait dans une distance configurée, activer les données relatives à la sécurité afin de permettre l'identification des données relatives à la sécurité correspondant au premier dispositif électronique externe (220).

6. Dispositif électronique (201) selon la revendication 1, où l'un ou plusieurs programmes informatiques comprennent en outre des instructions exécutables par ordinateur pour :
identifier un schéma de système d'exploitation pour faire fonctionner le dispositif électronique (201),
identifier, sur la base des premières données et des deuxièmes données, des données non prises en charge correspondant au schéma de système d'exploitation identifié, et
générer l'interface utilisateur pour empêcher la sélection des données non prises en charge identifiées.

7. Dispositif électronique (201) selon la revendication 6,
où l'un ou plusieurs programmes informatiques comprennent en outre des instructions exécutables par ordinateur pour :
identifier, sur la base des premières données et des deuxièmes données, si des données nécessitant une opération supplémentaire de restauration sont incluses, et
dans le cas où les données nécessitant l'opération supplémentaire de restauration seraient incluses, effectuer, sur la base du schéma de système d'exploitation identifié, une opération de restauration pour les données.

8. Dispositif électronique (201) selon la revendication 1, où l'un ou plusieurs programmes informatiques comprennent en outre des instructions exécutables par ordinateur pour :
identifier, sur la base des premières données et des deuxièmes données, au moins une application,
télécharger l'au moins une application identifiée par l'intermédiaire du circuit de communication (190), et
exécuter l'au moins une application.

9. Dispositif électronique (201) selon la revendication 1, où l'un ou plusieurs programmes informatiques comprennent en outre des instructions exécutables par ordinateur pour :
identifier, sur la base des premières données, un dispositif électronique périphérique connecté de manière opérationnelle au premier dispositif électronique externe (220), et
se connecter de manière opérationnelle au dispositif électronique périphérique identifié par l'intermédiaire du circuit de communication (190).

10. Procédé de fonctionnement d'un dispositif électronique (201), le procédé de fonctionnement comprenant :
acquérir (301), par le dispositif électronique (201) par l'intermédiaire d'un circuit de communication (190), des premières données d'un premier dispositif électronique externe (220) et des deuxièmes données d'un deuxième dispositif électronique externe (230) ayant un compte identique à celui du premier dispositif électronique externe (220) ;
identifier (303) des informations de référence de configuration (203) correspondant au compte, où les informations de référence de configuration (203) comprennent des informations relatives à un système d'exploitation du dispositif électronique (201) ;
sélectionner (305), par le dispositif électronique (201), sur la base des informations de référence de configuration identifiées (203), au moins une donnée qui est prise en charge par le système d'exploitation du dispositif électronique (201) parmi les premières données et les deuxièmes données en désactivant la sélection de données identifiées comme des données non prises en charge ; et
générer (307), par le dispositif électronique (201), sur la base de l'au moins une donnée sélectionnée, une interface utilisateur.

11. Procédé d'exploitation selon la revendication 10, où l'acquisition des premières données et des deuxièmes données comprend :
accéder à un serveur, sur la base d'un premier compte ;
identifier le premier dispositif électronique externe (220) et le deuxième dispositif électronique externe (230) accédant, sur la base du premier compte, au serveur ; et
acquérir les premières données du premier dispositif électronique externe (220) et les deuxièmes données du deuxième dispositif externe (230) par l'intermédiaire du serveur.

12. Procédé d'exploitation selon la revendication 10, comprenant en outre :
identifier, sur la base des premières données et des deuxièmes données, si deux ou plusieurs données ayant un attribut identique sont incluses ; et
dans le cas où les deux ou plusieurs données ayant l'attribut identique seraient identifiées, sélectionner, sur la base d'une priorité configurée, les deux ou plusieurs données ayant l'attribut identique.

13. Procédé d'exploitation selon la revendication 10, comprenant en outre :
identifier, sur la base des premières données et des deuxièmes données, si des données relatives à la sécurité sont incluses ;
sélectionner les données relatives à la sécurité afin de distinguer entre des données relatives à la sécurité correspondant au premier dispositif électronique externe (220) et des données relatives à la sécurité correspondant au deuxième dispositif électronique externe (230) ;
identifier une distance par rapport au premier dispositif électronique externe (220) par l'intermédiaire du circuit de communication (190) ; et
dans le cas où la distance identifiée se trouverait dans une distance configurée, activer les données relatives à la sécurité afin de permettre l'identification des données relatives à la sécurité correspondant au premier dispositif électronique externe (220).

14. Procédé d'exploitation selon la revendication 10, comprenant en outre :
identifier un schéma de système d'exploitation pour faire fonctionner le dispositif électronique (201) ;
identifier, sur la base des premières données et des deuxièmes données, des données non prises en charge correspondant au schéma de système d'exploitation identifié ; et
générer l'interface utilisateur pour empêcher la sélection des données non prises en charge identifiées.
